# EUROPEAN PATENT SPECIFICATION

(11) **EP 1 483 469 B1**
(45) Date of publication and mention of the grant of the patent: **23.11.2005**
(21) Application number: 04721740.1
(22) Date of filing: 18.03.2004
(51) Int. Cl.: E04H 17/16, F16B 7/04

(54) **CONNECTING ASSEMBLY FOR SITE FENCES**
VERBINDUNGSANORDNUNG FÜR DIE GEBÄUDEZÄUNE
ENSEMBLE DE RACCORDEMENT POUR CLOTURES DE CHANTIER

(30) Priority: 19.03.2003 NL 1022969
(43) Date of publication of application: 08.12.2004
(73) Proprietor: C.R.H. Fencing & Security Group B.V., 5688 JE Oirschot (NL)
(72) Inventor: SPIERINGS, Aloysius, Jaques, Gerardus, NL-5629 GW Eindhoven (NL)
(74) Representative: Hoorweg, Petrus Nicolaas
(86) International application number: PCT/NL2004/000194
(87) International publication number: WO 2004/083572

(56) References cited:
- DE-A- 3 730 594
- FR-A- 2 659 104
- GB-A- 2 338 770
- GB-A- 2 391 560

## Description

The invention relates to a connecting assembly for releasably coupling to each other mutually adjacent site perimeter fences, each at least consisting of two posts and a wire mesh arranged therebetween, which assembly consists of two curved wing profiles for bringing together such that the wing ends come to lie against the sides of a post, wherein the centres of the wing profiles can be tightened together by means of a screw bolt or the like, wherein at least the one wing profile is provided in the centre with a continuous hole for receiving the bolt connected beforehand non-rotatably to the other wing.

Such site fences are usually arranged standing adjacently of each other round a building site, wherein the fences have to be mutually connected with a coupling means. It is known to do this with two wing profiles, wherein these are mutually coupled by means of a bolt construction.

GB 2338770 describes such a connecting assembly, wherein for securing the two wing profiles (clamp members 50, 51) together to the post elements therebetween, a bolt having a nut engaged therewith may be used and such a bolt may have its head embedded in one of the clamp member (52).

This construction is accessible and can be easily removed by unauthorized persons.

The invention has for its object to provide an assembly wherein this is no longer possible, and only authorized persons can release the coupling.

The invention provides for this purpose a connecting assembly which is distinguished in that a protective member is arranged which is mounted around the hole and has a space for receiving in countersunk manner a nut body for rotating onto the bolt, and wherein the height of the protective member is greater than the height of the nut body.

Because the nut body now lies wholly flush in the protective member, the nut body can no longer be engaged by a random nut spanner. By further embodying the nut body with a special pattern of recesses which co-acts with a special tool which is formed to fit thereon, this tool can be rotated by for instance an electric screwdriver or other type of hand-tool, and it is moreover ensured that the nut body can be easily fastened or removed, although only by authorized persons.

In a further embodiment the protective member can take a cup-like form, wherein the base of the cup can be welded to one of the wing profiles.

In a preferred embodiment the bolt is provided with a widened head which is embodied with a non-round undercut, wherein the hole in the other wing profile is correspondingly non-round. This achieves that the threaded shank of the bolt does not co-rotate when the nut body is tightened.

In another embodiment the threaded shank of the bolt can be fixed directly onto the other wing profile, for instance by means of a welding operation.

The invention will be further elucidated in the figure description hereinbelow of a number of exemplary embodiments.

In the drawing:

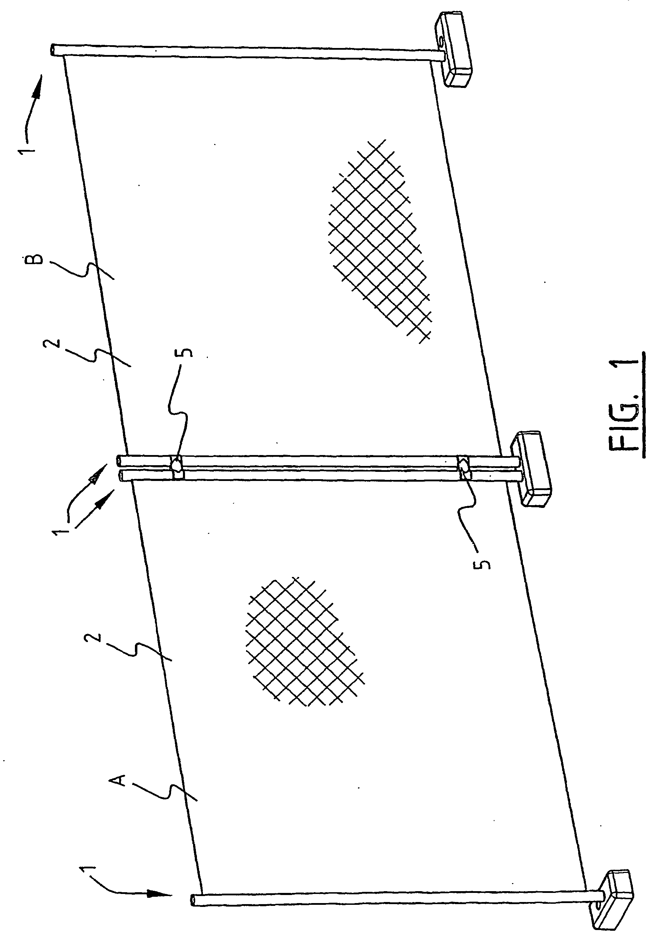

fig. 1 shows a perspective schematic view of two site fences mutually coupled by means of the assembly according to the invention;
fig. 2 is a perspective view of the two wing profiles with a profile bolt with nut body for placing therethrough;
fig. 3 shows a variant of the fixing of the shank to the wing profile.

In the figures the one site fence is designated with A and the other with B, and these are constructed in the usual manner from two posts (1) with wire mesh (2) arranged therebetween. Each post (1) can be of random type and usually consists of a tube profile. The wire meshes can also be of random construction, for instance of horizontal and vertical wires welded fixedly to each other in a grid pattern, wherein curvatures can be arranged in the surface to increase the bending stiffness. This is assumed to be generally known.

Each post (1) can be placed with a foot in a hole or recess of a concrete block or the like, to enable upright placing of each site fence and assembly with other site fences to form a random perimeter fence.

In order to increase the strength and successfully keep out intruders, the posts (1) extending adjacently of each other can be mutually connected by a connecting assembly S according to the invention.

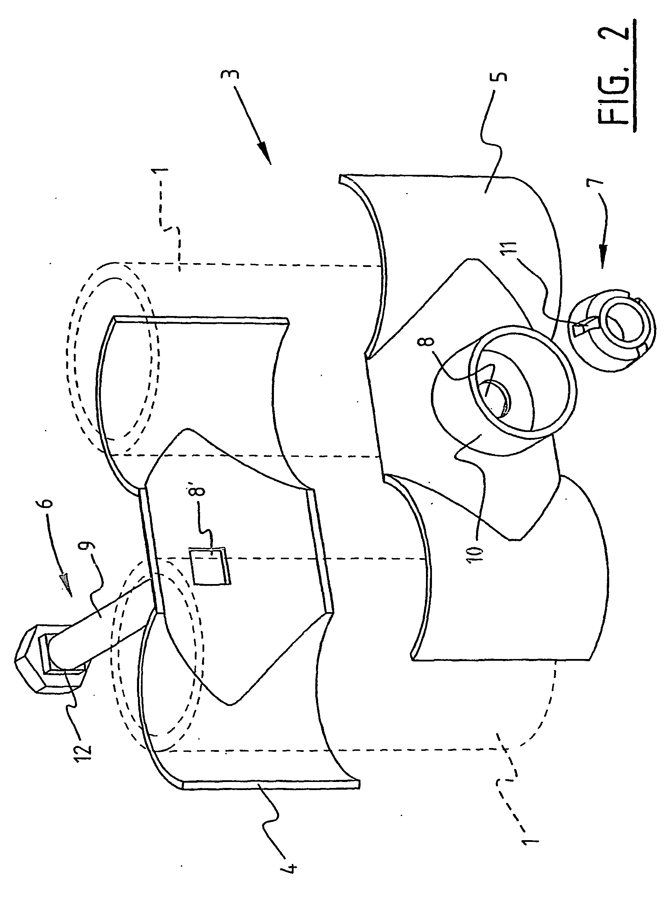

The connecting assembly is shown in figure 2 and consists of two wing profiles (3,4) which are constructed from plate material and formed such that a wave-like shape is obtained, wherein the ends come to lie on either side of posts (1).

The two wing profiles are connected to each other by a clamping construction consisting of a bolt (6) with a co-acting nut body (7).

In the middle of the wing profiles is arranged a continuous hole (8) for receiving the shank (9) of bolt (6).

In figure 2 a cup-like protective member (10) is arranged around hole (8) on the front side of wing profile (3). It is a peripheral cup which has a height H such that it is greater than the height h of nut body (7). After assembly, i.e. after shank (9) has been fed through opening (8) and nut body (7) has been arranged on shank (9) of bolt (6), the nut body comes to lie wholly countersunk in the cup-like protective member (10). Nut body (7) is embodied with recesses 11 which can be arranged in a random pattern along the periphery, and with which a tool with matching protrusions can be placed in the recesses (11).

Using this tool the nut body (7) can be tightened onto the shank of bolt (6), or can be loosened for assembly purposes.

In order to prevent rotation of bolt (6) in the hole of wing profile (4), there is arranged an undercut (12) which has a square shape. This square undercut (12) fits into the corresponding square hole (8') of wing profile (4) to prevent rotation of the shank.

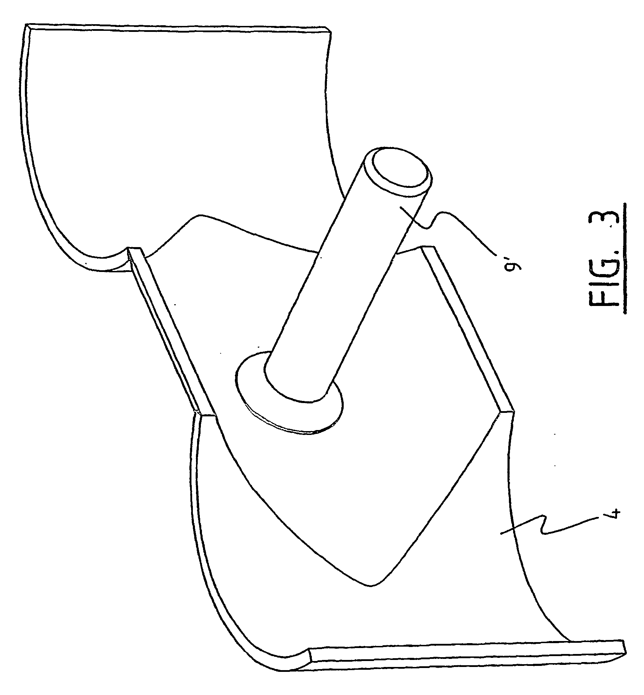

In another embodiment the shank (9') can be welded directly onto the wing profile, see figure 3.

## Claims

1. Connecting assembly for releasably coupling to each other mutually adjacent site perimeter fences, each at least consisting of two posts (1) and a wire mesh (2) arranged therebetween, which assembly consists of two curved wing profiles (3, 4) for bringing together such that the wing ends come to lie against the sides of a post (1), wherein the centres of the wing profiles can be tightened together by means of a screw bolt (6) or the like, wherein at least the one wing profile is provided in the centre with a continuous hole (8) for receiving the bolt (6) connected beforehand non-rotatably to the other wing, **characterized in that** a protective member (10) is arranged which is mounted around the hole (8) and has a space for receiving in countersunk manner a nut body (7) for rotating onto the bolt, and wherein the height of the protective member (10) is greater than the height of the nut body (7).

2. Connecting assembly as claimed in claim 1, **characterized in that** the protective member (10) is cup-like.

3. Connecting assembly as claimed in claim 1 or 2, **characterized in that** the nut body (7) has an upper surface with recesses (11) which co-acts with a rotary tool engaging close-fittingly into the recesses.

4. Connecting assembly as claimed in any of the foregoing claims, **characterized in that** the bolt (6) is provided with a widened head which is embodied with a non-round undercut (12), wherein the hole in the other wing profile is correspondingly non-round.

5. Connecting assembly as claimed in claims 1-3, **characterized in that** the bolt shank (9) is fixed directly onto the other wing profile, for instance by a welding operation.

## Patentansprüche

1. Verbindungsanordnung zum lösbaren Aneinanderkoppeln von benachbarten Baueinzäunungen, die jeweils wenigstens aus zwei Pfosten (1) und einem dazwischen angeordneten Drahtgitter (2) bestehen, wobei die Verbindungsanordnung aus zwei gekrümmten Flügelprofilen (3, 4) besteht, um diese so zusammenzubringen, dass die Flügelenden an den Seiten eines Pfostens (1) liegen, wobei die Mittelteile der Flügelprofile mittels einer Schraube (6) oder dergleichen aneinander befestigt werden können, wobei wenigstens ein Flügelprofil im mittleren Teil mit einem durchgehenden Loch (8) zum Aufnehmen des Schraubbolzens (6) versehen ist, der zuvor nicht drehbar an dem anderen Flügel befestigt ist, **dadurch gekennzeichnet, dass** ein Schutzelement (10) vorgesehen ist, das um das Loch (8) montiert ist und einen Raum zum Aufnehmen eines versenkten Mutterkörpers (7) hat, der auf dem Schraubbolzen dreht, und wobei die Höhe des Schutzelementes (10) größer als die Höhe des Mutterkörpers (7) ist.

2. Verbindungsanordnung nach Anspruch 1, **dadurch gekennzeichnet, dass** das Schutzelement (10) kappenförmig ist.

3. Verbindungsanordnung nach Anspruch 1 oder 2, **dadurch gekennzeichnet, dass** der Mutterkörper (7) eine Oberseite mit Aussparungen (11) hat, die mit einem Drehwerkzeug zusammenwirken, welches mit enger Passung in die Aussparungen eingreift.

4. Verbindungsanordnung nach einem der vorstehenden Ansprüche, **dadurch gekennzeichnet, dass** der Schraubbolzen (6) mit einem aufgeweiteten Kopf versehen ist, der mit einer nicht runden Unterschneidung (12) ausgebildet ist, wobei das Loch in dem anderen Flügelprofil entsprechend nicht rund ist.

5. Verbindungsanordnung nach Anspruch 1 bis 3, **dadurch gekennzeichnet, dass** der Schraubenschaft (9) direkt auf dem anderen Flügelprofil, beispielsweise durch einen Schweißvorgang, befestigt ist.

## Revendications

1. Ensemble de raccordement destiné à coupler de façon amovible les unes avec les autres des clôtures mutuellement adjacentes d'un périmètre de chantier, chacune étant constituée au moins de deux poteaux (1) et d'un grillage (2) agencé entre eux, lequel ensemble est constitué de deux profils d'ailes incurvées (3, 4) destinés à les réunir de telle sorte que les extrémités d'ailes viennent reposer contre les côtés d'un poteau (1), dans lequel les centres des profils d'ailes peuvent être serrés ensembles à l'aide d'un boulon à vis (6) ou analogues, dans lequel au moins l'un parmi les profils d'ailes est prévu avec en son centre un trou continu (8) destiné à recevoir le boulon (6) raccordé à l'avance de façon non rotative à l'autre aile, **caractérisé en ce qu'**un élément de protection (10) est agencé, lequel élément est monté autour du trou (8) et comporte un espace destiné recevoir de manière noyée un corps d'écrou (7) destiné à effectuer une rotation sur le boulon, et dans lequel la hauteur de l'élément de protection (10) est supérieure à la hauteur du corps d'écrou (7).

2. Ensemble de raccordement selon la revendication 1, **caractérisé en ce que** l'élément de protection (10) est cupulaire.

3. Ensemble de raccordement selon la revendication 1 ou 2, **caractérisé en ce que** le corps d'écrou (7) comporte une surface supérieure avec des évidements (11) qui agissent conjointement avec un outil rotatif s'engageant par ajustement serré dans les évidements.

4. Ensemble de raccordement selon l'une quelconque des revendications précédentes, **caractérisé en ce que** le boulon (6) est prévu avec une tête élargie, laquelle est intégrée avec un dégagement non arrondi (12), dans lequel le trou dans l'autre profil d'aile est de façon correspondante non arrondi.

5. Ensemble de raccordement selon les revendications 1 à 3, **caractérisé en ce que** la tige (9) de boulon est directement fixée sur l'autre profil d'aile, grâce à une opération de soudage par exemple.
